**Europäisches Patentamt**

**European Patent Office**

**Office européen des brevets**

(11) Veröffentlichungsnummer: **0 057 410**
A2

# (12) EUROPÄISCHE PATENTANMELDUNG

(21) Anmeldenummer: 82100525.3

(22) Anmeldetag: 26.01.82

(51) Int. Cl.³: **B 62 B 15/00**

(30) Priorität: 03.02.81 DE 8102708 U
13.02.81 DE 8104014 U

(43) Veröffentlichungstag der Anmeldung: 11.08.82
Patentblatt 82/32

(84) Benannte Vertragsstaaten: AT CH DE FR GB IT LI SE
(71) Anmelder: John GmbH, Industriestrasse 23,
D-8228 Freilassing (DE)

(72) Erfinder: Gruber, Ludwig, Surheimerstrasse 11,
D-8228 Freilassing (DE)

(74) Vertreter: Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)

(54) Aufblasbarer Schlitten.

(57) Der aufblasbare Schlitten umfasst mindestens eine Luftkammer (3, 5, 7), welche durch ein flexibles Oberblatt (11) und ein flexibles, längs einer umlaufenden Bartnaht (19) dicht mit dem Oberblatt (11) verbundenes Unterblatt (17) gebildet ist. Zumindest das Unterblatt (17) besteht aus zwei etwa gleich grossen, lose aneinanderliegenden Blättern (13, 15), von denen zumindest das innere Blatt (13) aus einem luftundurchlässigen Material besteht. Das äussere Blatt (15) des Unterblatts (17) schützt beim Rodeln das innere Blatt (13) vor Beschädigungen und kann gegebenenfalls leicht repariert werden.

## Aufblasbarer Schlitten

Die Erfindung betrifft einen aufblasbaren Schlitten, mit zumindest einer durch ein flexibles Oberblatt und ein flexibles, längs einer umlaufenden Bartnaht dicht mit dem Oberblatt verbundenes Unterblatt gebildeten Luftkammer und einem am Oberblatt dicht befestigten Füllventil pro Luftkammer.

Schlitten dieser Art sind beispielsweise aus den deutschen Gebrauchsmustern 70 25 127 und 78 01 034 bekannt. Sie haben matratzenähnliche Form und mindern, da sie elastisch sind, das Verletzungsrisiko beim Rodeln. Als Schwachstelle derartiger Schlitten hat sich das beim Rodeln über den Boden gleitende Unterblatt erwiesen. Aus dem Boden hervorstehende Steine oder Stöcke können das Unterblatt zerreißen, womit die Luftkammer undicht wird. Eine Reparatur erwieß sich in vielen Fällen als unmöglich, da sich die Löcher gerade an den beanspruchten Stellen des Unterblatts befanden. Insbesondere konnte das Unterblatt nicht dauerhaft dicht geflickt werden. Es wurde deshalb versucht, das Unterblatt aus einem besonders haltbaren und widerstandsfähigem Material zu machen. Die Verwendung solcher Materialien erhöhte aber die Herstellungskosten des Schlittens, ohne daß das vorstehende Problem gelöst wurde.

0057410

Aufgabe der Erfindung ist es, die Widerstandsfähigkeit der Luftkammer bzw. Luftkammern des eingangs näher erläuterten Schlittens auf konstruktiv einfache Weise zu erhöhen.

Diese Aufgabe wird erfindungsgemäß dadurch gelöst, daß das Unterblatt aus zwei gleich großen, lose aneinanderliegenden Blättern besteht, von denen zumindest das innere Blatt aus einem luftundurchlässigen Material besteht. Die beiden Blätter des Unterblatts werden wie bisher entlang der Bartnaht miteinander und mit dem Oberblatt dicht verbunden. Der Schlitten gleitet auf dem äußeren Blatt des Unterblatts. Wird das äußere Blatt beim Rodeln beschädigt, so kann die Luft trotzdem nicht aus der Luftkammer entweichen. Es hat sich gezeigt, daß die Haltbarkeit von Schlitten mit zweiblättrigem Unterblatt wesentlich gegenüber Schlitten mit gleich dickem, jedoch einblättrigem Unterblatt erhöht werden konnte. Da die beiden Blätter lose aufeinanderliegen, heben Steine oder Stöcke, die das äußere Blatt des Unterblatts durchdringen, das innere Blatt lediglich von diesem ab und drücken es in die Luftkammer hinein. Das innere Blatt bleibt so in der Regel unbeschädigt. Kleine Risse im äußeren Blatt des Unterblatts brauchen vielfach überhaupt nicht geflickt werden. Wird der Riß geflickt, so muß nicht auf die Dichtheit der Reparaturstelle geachtet werden. Zweckmäßigerweise besteht auch das Oberblatt aus zwei gleich großen, lose aneinanderliegenden Blättern.

Das innere Blatt besteht zweckmäßigerweise aus einer Kunststoffolie und das äußere Blatt aus einem kunststoffbeschichtetem Gewebe. Das äußere Blatt ist aus mechanisch stark beanspruchbarem Material, während das innere Blatt lediglich die Luftkammer abdichten soll und aus einer verglichen mit dem äußerem Blatt dünnen Folie bestehen kann. Für das innere Blatt haben sich Polyvinylchlorid-Folien als brauchbar herausgestellt. Geeignet ist aber auch Gummi (Naturgummi oder synthetischer Gummi). Für das äußere Blatt werden vorzugsweise polyvinylchloridbeschichtete Gewebe, insbesondere Polyestergewebe benutzt, die sich durch hohe mechanische Festigkeit und Alterungsbeständigkeit auszeichnen.

Von wesentlicher Bedeutung sind Ausführungsformen, bei welchen das Unterblatt und das Oberblatt im wesentlichen langgestreckte Form haben und zur Bildung von drei langgestreckten Kammern entlang von zwei in Längsrichtung verlaufenden Trennähten oder Trennstegen miteinander verbunden sind. Bevorzugt sind bei einer solchen Ausführungsform an der Unterseite des Unterblatts entlang der beiden äußeren Kammern und/oder der inneren Kammer eine langgestreckte Kufe aus einem flexiblem Material angebracht. Die Kufen stabilisieren die Richtung des Schlittens. Es hat sich in diesem Zusammenhang als ausreichend herausgestellt, wenn ausschließlich entlang der mittleren Kammer eine Kufe angebracht ist. Diese Maßnahme verringert nicht nur den konstruktiven Aufwand, sondern verbessert auch die Spurtreue des Schlittens, wenn dieser von Kleinkindern benutzt wird, die aufgrund ihrer Größe im wesentlichen nur die mittlere Kammer belasten.

Der Schlitten läßt sich leicht steuern, wenn jede Kufe im wesentlichen bis an das in Fahrtrichtung hintere Ende der Kammer heranreicht und kürzer als etwa 2/3 der Länge der Kammer ist.

Die Kufen sind bevorzugt scharfkantig. Geeignet sind insbesondere Kufen in Form einer rechteckförmigen Leiste, die an einer ihrer Schmalseiten einen Befestigungsflansch trägt.

Bei einer anderen bevorzugten Ausführungsform mit wenigstens drei im wesentlichen langgestreckten Kammern ist vorgesehen, daß am Oberblatt der beiden äußersten Kammern

0057410

-4-

im Bereich des in Fahrtrichtung hinteren Endes dieser Kammern je ein im wesentlichen nach oben abstehender Bügelgriff angebracht ist. Beim Rodeln befinden sich diese Griffe seitlich neben oder hinter dem Sitzbereich. Das rodelnde Kind kann sich also nach hinten an den Griffen abstützen, wobei es die hinteren Enden der äußeren Kammern belastet und so die Spurtreue des Schlittens verbessert.

Die Bügelgriffe stehen nach oben, vorzugsweise nahezu vertikal nach oben ab. Bei Belastung drücken sich die Bügelgriffe lediglich in die Kammern ein, können aber nicht oder nur wenig zur Seite ausweichen. Handverletzungen, wie sie bei bisher üblichen, seitlich angebrachten Griffen entstanden sind, sind weitgehend ausgeschlossen.

Für eine bequeme Griffstellung weisen die beiden Bügelgriffe in Fahrtrichtung voneinander weg.

Im folgenden soll ein Ausführungsbeispiel der Erfindung anhand einer Zeichnung näher erläutert werden. Es zeigt

Fig. 1 eine Oberansicht eines aufblasbaren Schlittens;

Fig. 2 eine Seitenansicht des Schlittens nach Fig. 1;

Fig. 3 eine Unteransicht des Schlittens nach Fig. 1 und

Fig. 4 einen Querschnitt durch den Schlitten nach Fig. 1 entlang einer Linie IV-IV.

Der aufblasbare Schlitten hat die Form einer flachen, langgestreckten und in Fahrtrichtung vorne abgerundeten oder keilförmigen Matratze 1 und besteht aus drei länglichen, entlang benachbarter Längsseiten miteinander verbundenen Luftkammern 3, 5 und 7 von denen die mittlere Luftkammer 5 kleineren Durchmesser hat als die beiden äußeren Luftkam-

0057410

mern 3 und 7, womit der Schlitten eine muldenförmige Oberseite erhält. Jede der Luftkammern 3, 5, 7 hat auf ihrer Oberseite ein eigenes Füllventil 9 über das sie aufgeblasen werden kann. Sofern die Luftkammern untereinander in Verbindung stehen, genügt ein einziges Füllventil.

Die Matratze 1 ist aus einem flexiblen Oberblatt 11 und einem aus zwei Blättern 13, 15 bestehenden, allgemein mit 17 bezeichneten Unterblatt gefertigt. Das Oberblatt 11 und das Unterblatt 17 haben etwa gleiche Größe und sind entlang einer um die Matratze 1 herumgeführten, die Außenkontur des Schlittens bestimmenden Bartnaht 19 sowie entlang von Trennähten 21, die die mittlere Luftkammer 5 von den beiden äußeren Luftkammern 3 und 7 trennen, dicht miteinander verbunden, z.B. verschweißt oder verklebt. Das Oberblatt 11 sowie das innere Blatt 13 des Unterblatts 17 bestehen aus Kunststoffolien, insbesondere Polyvinylchlorid-Folien, die sich einstückig über sämtliche drei Luftkammern 3, 5, 7 hinweg erstrecken. Das äußere Blatt 15 des Unterblatts 17 bildet die Lauffläche des Schlittens und besteht aus einem mechanisch widerstandsfähigem Material, insbesondere kunststoffbeschichtetem Gewebe, wie z.B. einem polyvinylchloridbeschichteten Polyestergewebe. Während das äußere Blatt 15 für die mechanische Festigkeit der Gleitflächenseite des Schlittens sorgt, dichtet das innere Blatt 13 die Luftkammern 3, 5, 7 ab, so daß bei einer durchdringenden Beschädigung des äußeren Blatts 15 die Luftkammern dicht bleiben.

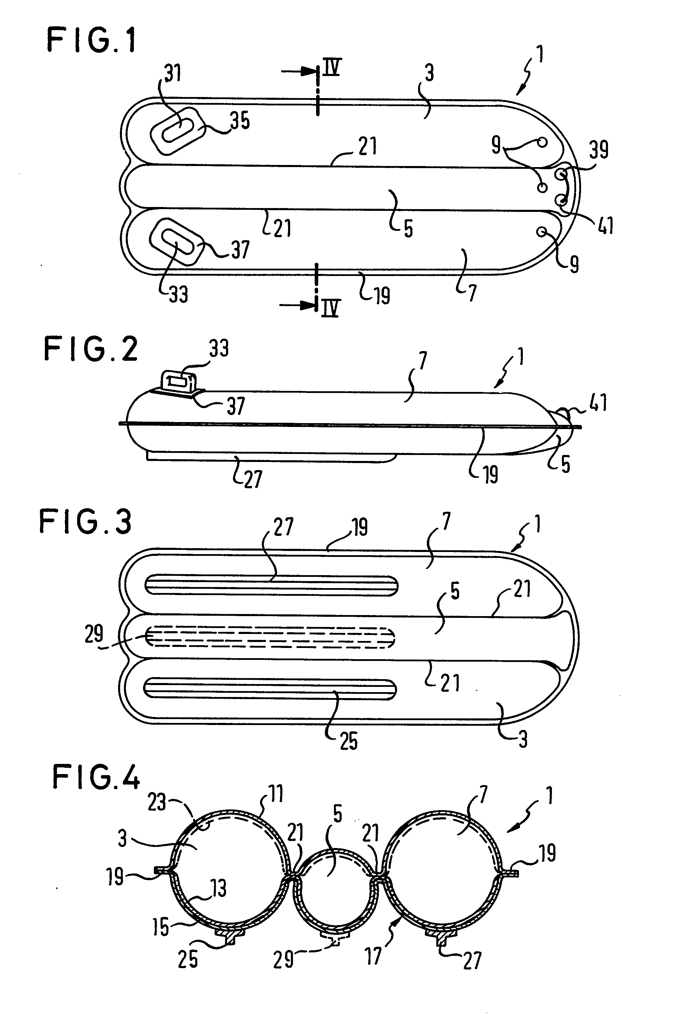

Sofern auch auf eine erhöhte mechanische Beanspruchbarkeit des Oberblatts 11 Wert gelegt wird, kann auch dieses aus zwei lose aufeinanderliegenden Blättern bestehen, von denen das innere Blatt die Dichtfunktion übernimmt und das äußere Blatt für die mechanische Beanspruchbarkeit sorgt. In Fig. 4 ist ein zweites Blatt bei 23 gestrichelt angedeutet. Bei einer solchen Ausführungsform muß sich das Füllventil 9 auch durch das zweite Blatt 23 hindurch erstrecken und mit diesem dicht verbunden sein.

Längs der Unterseite der beiden äußeren Luftkammern 3 und 7 sind Kufen 25, 27 am äußeren Blatt 15 angebracht, beispielsweise angeklebt oder angeschweißt. Das hintere Kufenende liegt etwa im Bereich des hinteren Ende der Luftkammern 3 und 7. Die Kufen 25 und 27 sind länger als die halbe Länge der Luftkammern 3 und 7 jedoch kürzer als 2/3 der Kammerlänge. Im Querschnitt gesehen haben die Kufen das Profil einer Rechteckleiste mit scharfkantigen freien Längskanten, von deren Schmalseite T-förmig ein Flansch zur Befestigung am äußeren Blatt 15 absteht. Das in Fahrtrichtung vorne gelegene Ende der Kufen 25, 27 ist angeschrägt. Die Kufen 25 und 27 bestehen aus einem flexiblen Kunststoffmaterial.

Zusätzlich zu den Kufen 25 und 27 der beiden äußeren Luftkammern 3 und 7, vorzugsweise aber statt dieser beiden Kufen kann auf der Unterseite der Luftkammer 5 eine Kufe 29 entsprechender Gestaltung angebracht sein. Die an der mittleren Luftkammer 5 angebrachte Kufe erlaubt auch bei geringer Gewichtsbelastung im Mittelbereich des Schlittens eine sichere Seitenführung, was insbesondere für den Transport von Kleinkindern wichtig ist.

Im Bereich der in Fahrtrichtung hinten gelegenen Enden der Luftkammern 3 und 7 sind jeweils Bügelgriffe 31, 33 auf der Oberseite der Luftkammern 3 und 7 angebracht. Die Bügelgriffe 31 und 33 befinden sich etwa im Mittelbereich der Luftkammern und stehen etwa vertikal nach oben ab. Ihre Grifflängsrichtungen sind in Fahrtrichtung nach außen gerichtet. An solchen Bügelgriffen kann sich der Schlittenfahrer bequem nach hinten abstützen. Aufgrund ihrer Anordnungsweise, ist ein Bodenkontakt der Hände ausgeschlossen. Breite Befestigungsflansche 35, 37 der Bügelgriffe 31 und 33 unterstützen diese Wirkung.

Am Vorderende der mittleren Luftkammer 5 sind Befestigungsaugen 39, 41 zum Einknüpfen einer Zugschnur angebracht.

An den Bügelgriffen 31 und 33 können nicht dargestellte, vorzugsweise in Längsrichtung verlaufende Befestigungsöffnungen für Halteschnüre oder eine in die Befestigungsöffnungen einsteckbare Rückenlehne vorgesehen sein.

Patentansprüche

1. Aufblasbarer Schlitten, mit zumindest einer durch ein flexibles Oberblatt und ein flexibles, längs einer umlaufenden Bartnaht dicht mit dem Oberblatt verbundenes Unterblatt gebildeten Luftkammer und einem am Oberblatt dicht befestigten Füllventil pro Luftkammer, dadurch gekennzeichnet, daß das Unterblatt (17) aus zwei etwa gleich großen, lose aneinanderliegenden Blättern (13, 15) besteht, von denen zumindest das innere Blatt (13) aus einem luftundurchlässigen Material besteht.

2. Schlitten nach Anspruch 1, dadurch gekennzeichnet, daß das Oberblatt (11) aus zwei etwa gleich großen, lose aneinanderliegenden Blättern besteht, von denen das innere Blatt aus einem luftundurchlässigen Material besteht.

3. Schlitten nach Anspruch 1 oder 2, dadurch gekennzeichnet, daß das innere Blatt (13) aus einer Folie, insbesondere Kunststoffolie und das äußere Blatt (15) aus einem kunststoffbeschichteten Gewebe besteht.

4. Schlitten nach Anspruch 3, dadurch gekennzeichnet, daß das innere Blatt (13) aus einer Polyvinylchlorid-Folie und das äußere Blatt (15) aus polyvinylchloridbeschichtetem Gewebe, insbesondere Polyestergewebe besteht.

5. Schlitten insbesondere nach Anspruch 1, dadurch gekennzeichnet, daß das Unterblatt (17) und das Oberblatt (11) im wesentlichen langgestreckte Form haben und zur Bildung von drei langgestreckten Kammern (3, 5, 7) entlang von zwei in Längsrichtung verlaufende Trennnähten (21) oder Trennstege miteinander verbunden sind, und daß auf der Außenseite des Unterblatts (17) entlang der beiden äußeren Kammern (3, 7) und/oder der inneren Kammer (5) eine langgestreckte Kufe (25, 27, 29) aus einem flexiblen Material angebracht ist.

6. Schlitten nach Anspruch 5, dadurch gekennzeichnet, daß ausschließlich entlang der mittleren Kammer (5) eine Kufe (29) angebracht ist.

7. Schlitten nach Anspruch 5, dadurch gekennzeichnet, daß jede Kufe (25, 27, 29) im wesentlichen bis an das in Fahrtrichtung hintere Ende der Kammer (3, 5, 7) heranreicht und kürzer als etwa 2/3 der Länge der Kammer (3, 5, 7) ist.

8. Schlitten nach Anspruch 5, dadurch gekennzeichnet, daß jede Kufe (25, 27, 29) die Form einer rechteckförmigen Leiste hat, die an einer ihrer Schmalseiten einen Befestigungsflansch trägt.

9. Schlitten nach Anspruch 5, dadurch gekennzeichnet, daß die beiden Trennähte (21) zur Unterteilung in drei gesonderte Luftkammern (3, 5, 7) bis an die umlaufende Bartnaht (19) heranreichen.

10. Schlitten insbesondere nach Anspruch 1, dadurch gekennzeichnet, daß er wenigstens drei im wesentlichen langgestreckte Kammern (3, 5, 7) aufweist und daß am Oberblatt (11) der beiden äußeren Kammern (3, 7) im Bereich des in Fahrtrichtung hinteren Endes dieser Kammern (3, 7) je ein im wesentlichen nach oben abstehender Bügelgriff (31, 33) angebracht ist.

11. Schlitten nach Anspruch 10, dadurch gekennzeichnet, daß die Bügelgriffe (31, 33) nahezu vertikal nach oben abstehen.

0057410

12. Schlitten nach Anspruch 10, dadurch gekennzeichnet, daß die beiden Bügelgriffe (31, 33) in Fahrtrichtung voneinander weg weisen.

FIG.1

FIG.2

FIG.3

FIG.4